(19) **Europäisches Patentamt / European Patent Office / Office européen des brevets**

(11) **EP 4 629 616 A1**

(12) # EUROPEAN PATENT APPLICATION

(43) Date of publication:
08.10.2025   Bulletin 2025/41

(21) Application number: 24305506.8

(22) Date of filing: 02.04.2024

(51) International Patent Classification (IPC):
$H04N\ 19/105^{(2014.01)}$   $H04N\ 19/11^{(2014.01)}$
$H04N\ 19/176^{(2014.01)}$   $H04N\ 19/593^{(2014.01)}$

(52) Cooperative Patent Classification (CPC):
H04N 19/105; H04N 19/11; H04N 19/176;
H04N 19/593

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• RATH, Gagan Bihari
  35000 RENNES (FR)
• BORDES, Philippe
  35890 LAILLE (FR)
• CHEN, Ya
  35000 RENNES (FR)
• DE LAGRANGE, Philippe
  35830 BETTON (FR)

(74) Representative: Vossius & Partner
Patentanwälte Rechtsanwälte mbB
Siebertstraße 3
81675 München (DE)

(54) **PERSPECTIVE INTRA PREDICTION WITH SPATIAL GEOMETRIC PARTITIONING MODE**

(57)   Methods and apparatus are provided to perform perspective prediction with spatial geometric partition mode. In one embodiment, a template prediction from a perspective point is used to determine whether to use perspective prediction. Associated flags are signaled to indicate the perspective prediction and prediction index.

The perspective point is chosen to be the same as that used for the template prediction. In another embodiment, a flag is signaled to indicate use of perspective prediction for an entire video block using a perspective point on an associated split direction. The first reference array above and to the left of the video block are used for prediction.

Figure 6

**Description**

<u>TECHNICAL FIELD</u>

At least one of the present embodiments generally relates to intra prediction of video blocks.

<u>BACKGROUND</u>

The general aspects described herein relate to approaches for intra prediction of video blocks using a spatial geometric partitioning mode.

<u>SUMMARY</u>

At least one of the present embodiments generally relates to a method or an apparatus for perspective prediction with SGPM (Split Geometric Partition Mode).
According to a first aspect, there is provided a method. The method comprises steps for determining whether perspective prediction is used to encode a video block; constructing a candidate list, based on said determining, comprising partition mode, a flag indicative of using perspective prediction, and intra prediction modes; predicting a sample of the video block; and, encoding the video block using the prediction of the sample

According to a second aspect, there is a method. The method comprises steps for parsing a video stream for at least one syntax element; decoding the at least one syntax element; deriving a candidate list comprising prediction candidates; determining whether to use perspective prediction based on the at least one syntax element and on the candidate list; and, decoding a video block using prediction based on the at least one syntax element.

According to another aspect, there is provided an apparatus. The apparatus comprises a processor and a memory. The processor can be configured to operate on digital video data according to the aforementioned methods.

According to another aspect, there is provided an apparatus. The apparatus comprises a processor and a memory. The processor can be configured to encode a block of a video or decode video data by executing any of the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

<u>BRIEF DESCRIPTION OF THE DRAWINGS</u>

Figure 1 illustrates an example of perspective prediction of a target block in intra prediction.
Figure 2 illustrates an example of intra prediction with perspective.
Figure 3 illustrates one example of a block split in SGPM.
Figure 4 illustrates a template used in SGPM to derive an SGPM candidate list.
Figure 5 illustrates an example of perspective prediction with SGPM.
Figure 6 illustrates another example of perspective prediction with SGPM.
Figure 7 illustrates an example of SGPM prediction with perspective mode signaling.
Figure 8 illustrates SGPM prediction with perspective mode signaling using multiple reference lines (MRL).
Figure 9 illustrates one embodiment of a first method under the described aspects.

Figure 10 illustrates another embodiment of a second method under the described aspects.
Figure 11 illustrates one embodiment of an apparatus under the described aspects.
Figure 12 illustrates a standard, generic, video compression scheme.
Figure 13 illustrates a standard, generic, video decompression scheme.
Figure 14 illustrates a processor-based system for encoding/decoding under the general described aspects.

DETAILED DESCRIPTION

In intra prediction, it is generally assumed that all pixels in a target block have the same directionality of prediction. This assumption is very restrictive and does not apply to blocks containing both parts of foreground objects and background in a frame. In ECM, there are intra prediction tools such as DIMD, TIMD, SGPM, etc. that estimate multiple prediction modes for a block and then blend those predictions to obtain a final prediction. SGPM, in particular, splits a target block in two parts along a predefined direction such that each part is predicted with a different prediction mode after the blending. As sending multiple prediction modes requires high amount of overhead, all these tools estimate multiple prediction modes using previously decoded neighbor samples of a block. Another method to support variable prediction directions for a target block is through the use of a perspective prediction.

One objective of the described aspects is to extend an earlier presented perspective intra prediction to be used with SGPM tool in ECM. We propose two methods for including perspective prediction with SGPM. In one method, the application of perspective prediction is decided using a template. In the other method, the encoder has the option of performing the prediction both with and without perspective. In this case, a flag indicating the application of the perspective prediction is signaled by the encoder. While the normal SGPM prediction uses two prediction modes and blends the two predictions obtained with them, in the perspective prediction, the perspective direction is decided based on the SGPM split direction and the prediction is applied over the entire block without any blending.

In Versatile Video Coding (WC) and Enhanced Compression Model (ECM), intra prediction is applied in All-Intra frames as well as in intra blocks in Inter frames, where a target block, called a coding unit (CU), is spatially predicted from the causal neighbor blocks in the same frame, i.e., the blocks on the top and top-right, the blocks on the left and left-bottom, and the top-left block. Based on the decoded pixel values in these blocks, the encoder constructs different predictions for the target block and chooses the one that leads to the best rate-distortion (RD) performance. In VVC, the predictions are tested for 67 prediction modes, which include one PLANAR mode (indexed as mode 0), one DC mode (indexed as mode 1), and remaining 65 angular modes. In ECM, the encoder also checks for predictions with MIP, DIMD, TIMD, SGPM, IntraTmp, etc., besides the 67 prediction modes to arrive at the best prediction for a target block.

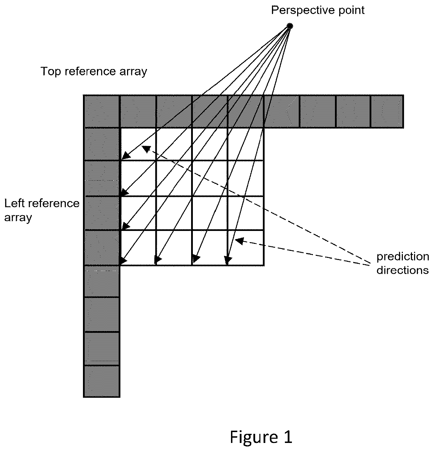

In perspective intra prediction, a target block is predicted using a perspective point. The perspective point is chosen on a straight line passing through the center of the block that indicates the prediction direction associated with an intra mode (Figure 1). The point is chosen at an offset distance from the block depending on the dimensions of the block.. In this disclosure, we consider the application of perspective prediction with SGPM mode. Before we present the methods, we will first summarize the proposed perspective prediction, and the SGPM prediction as used in ECM.

**Perspective Intra Prediction**

In perspective intra prediction, a target block is predicted using a perspective point, as shown in Figure 1. A perspective point is localized along the prediction direction at a certain offset distance from the target block. For vertical prediction modes, the vertical offset distance can be denoted by $dy$, and for horizontal modes, the horizontal offset distance can be denoted by $dx$. We will call $dx$ and $dy$ as the horizontal and vertical perspective distances, respectively. For a vertical angular mode, we call the corresponding perspective prediction vertical, and similarly for a horizontal prediction we call the corresponding perspective prediction horizontal. The primary difference between the normal prediction and the prediction with perspective is that the prediction direction along a row or a column is variable in the latter case. So, the angle parameter predIntraAngle, as defined in VVC or ECM, will be a function of the location of a target pixel.

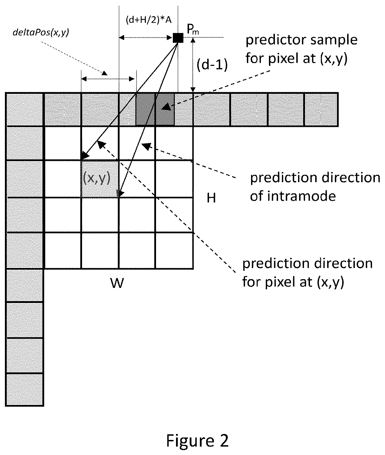

Figure 2 illustrates the derivation of the angle parameter for the target pixel at pixel position $(x,y)$. For the sake of illustration, we have chosen a vertical prediction mode with a perspective point above the block. The case is analogous for a horizontal mode when the perspective point is on the left of the block as the prediction can be obtained in the same manner by simply swapping the top and left reference arrays of a target block and transposing the obtained prediction at the end. Let $W$ and $H$ denote the width and height of the target block respectively. Let $d$ denote the perspective distance, that is, the vertical distance of the perspective point from the top edge of the target block. To avoid division operations, we will assume that d is a power of 2. In particular, we will use $d = k * H$, or $= k * W =$ where $k = 2^n$, $n = 0, 1, .. Kmax$, where $Kmax$ is a preset integer. Let $A(x, y)$ denote the predIntraAngle value at $(x,y)$ and let $A_o$ denote the angle parameter associated with the prediction mode of the parent CU.

The angle parameter at target pixel $(x, y)$ is computed as

$$A(x,y) = A(x,0) * (d/(d+y)).$$

where $A(x,0)$ denotes the angle parameter in the first row but in the same column as the target pixel. $A(x,0)$ is computed as

$$A(x,0) = \left( \left( \left( \frac{W}{2} - x \right) \ll s \right) + \left( d + \frac{H}{2} \right) * A_o \right) / d,$$

where s is equal to 5 or 6 depending on if the sample resolution of prediction direction is (1/32) or (1/64) of a pixel, respectively. The angle parameter can also be directly computed as

$$A(x,y) = \left( \left( \left( \frac{W}{2} - x \right) \ll s \right) + \left( d + \frac{H}{2} \right) * A_o \right) / (d+y),$$

Once predIntraAngle has been computed, the remaining steps to identify and interpolate the predictor samples on the reference arrays are identical to those used in VVC or ECM. Let deltaPos(x,y) denote the x-offset of the predictor from the target pixel at (x,y). Let deltaInt(x,y) and deltaFrac(x,y) denote the integral and fractional parts of deltaPos(x,y) computed as follows:

$$deltaPos(x,y) = (1+y) * A(x,y)$$

$$deltaInt(x,y) = deltaPos(x,y) \gg s$$

$$deltaFrac(x,y) = deltaPos(x,y) \,\&\, ((1 \ll s) - 1).$$

with s = 5 or 6 depending on (1/32) or (1/64) pixel resolution for intra prediction angle. Now the predictor sample can be interpolated using the six nearest reference samples, three on each side of the predictor sample, as in ECM, which are identified as

$$P0 = reMain[deltaInt(x,y) + x - 1]$$

$$P1 = reMain[deltaInt(x,y) + x]$$

$$P2 = reMain[deltaInt(x,y) + x + 1]$$

$$P3 = reMain[deltaInt(x,y) + x + 2]$$

$$P4 = reMain[deltaInt(x,y) + x + 3]$$

$$P5 = reMain[deltaInt(x,y) + x + 4],$$

where *refMain* is the main reference array pointing to the top-left corner pixel. The interpolation filter is determined from the value of *deltaFrac(x,y)*. If *f(n)* denotes the filter coefficients, the predictor sample is interpolated in ECM as P(x,y) = (f(0) * P0 + f(1) * P1 + f(2) * P2 + f(3) * P3 + f(4) * P4 + f(5) * P5 + 128) >> 8.

In VTM, only the four nearest reference samples, i.e., *P1*, *P2*, *P3*, and *P4* can be utilized for interpolating the predictor sample. Alternatively, the predictor can be linearly interpolated using only the two nearest reference samples *P2* and *P3*.

Finally, for some eligible prediction modes, the initial prediction may be followed by PDPC operation as presented in another work.

In the above definition, we have localized a perspective point on a line passing through the center of a target block. The line represents the direction corresponding to the intra prediction mode. In SGPM (to be described in the following), the line is still parallel to the direction of intra prediction mode, but can be offset by a distance z from the center of the block. In this case, the angle parameter predIntraAngle can be computed as:

$$A(x, y) = \left( \left( \left( \frac{W}{2} + z - x \right) \ll s \right) + \left( d + \frac{H}{2} \right) * A_o \right) / (d + y),$$

**Spatial Geometric Partitioning Mode (SGPM)**

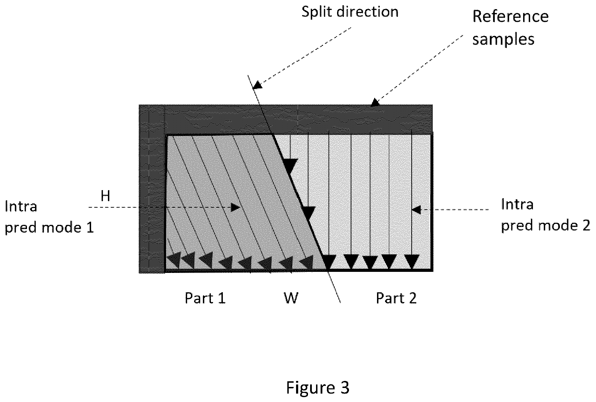

SGPM is an intra prediction tool in the ECM that tries to emulate GPM for inter prediction in VVC. The tool partitions a coding block into two parts and generates two distinct intra-prediction modes, one for each part. First two predictions for the entire CU are constructed, one with each prediction mode, which are then blended according to the partition direction so that each part gets its corresponding prediction. This is shown in Figure 3.

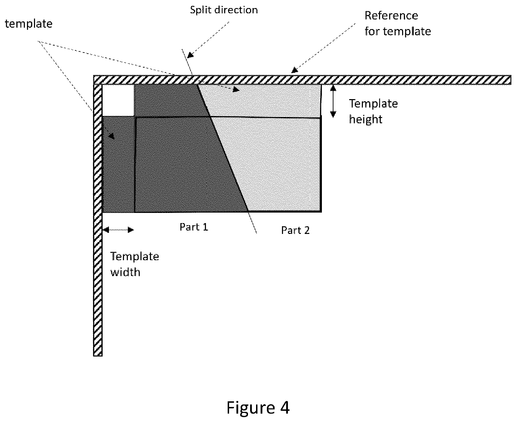

To efficiently express the partition and associated prediction information in the bit-stream, SGPM employs a template-reordered candidate list, where each candidate in the list comprises a combination of the partition mode and two intra prediction modes, and only signals the candidate index in the bit-stream. A template is used to generate this candidate list. The shape of the template is shown in Figure 4. For each possible combination of one partition mode and two intra prediction modes, a prediction is generated for the template with the partitioning weight extended to the template. These combinations are ranked in ascending order based on their SATD between the prediction and reconstruction of the template. The length of the candidate list is set equal to 16, and these candidates are regarded as the most probable SGPM combinations for the current block. Both encoder and decoder construct the same candidate list based upon the template.

To reduce the complexity in building the candidate list, both the number of possible partition modes and the number of possible intra prediction modes are pruned. In the adoption, 26 out of 64 partition modes are used, and only the MPMs out of 67 intra prediction modes are used. The encoder checks the coding performance with all 16 candidates in the list in a fast pass and then tests only the short-listed candidates for a full RD performance. If the candidate results in the best coding performance among all modes, then the encoder signals it with a sgpmFlag followed by the binary encoding of the candidate index in the list. The decoder will decode the sgpmFlag while parsing the bitstream if none of the previously signaled mode flags are 1. If the flag is decoded to be 1, it will decode the index of the candidate in the SGPM list. Thereafter, it will perform the whole process of template prediction to derive the two SGPM prediction modes for each partition mode to derive the list of best 16 candidates. Then, using the decoded candidate index, it derives the two prediction modes and the split direction. Using the two prediction modes, it will predict the current block and blend the two predictions in the same manner as done by the encoder to arrive at the final prediction.

**Perspective intra Prediction with SGPM**

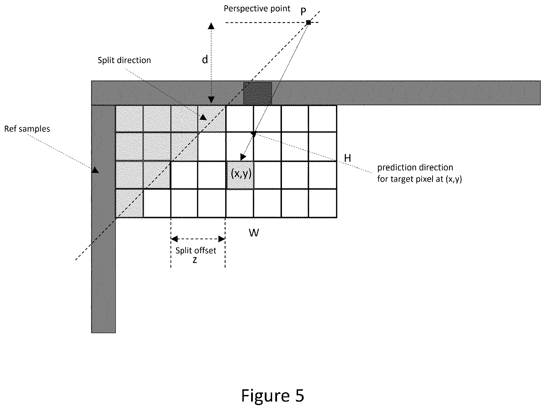

In SGPM, each partition mode consists of a pair of parameters: a split direction and a split offset. The former indicates the direction of the block split into two parts whereas the latter denotes the offset of the split edge from the center of the block. Each partition mode is associated with two prediction modes that represent the prediction directions of the target pixels in the two parts of the block after being split. For perspective prediction, we define the prediction direction as the split direction associated with a partition mode. Thus, the prediction mode is the intra mode that is associated with the split direction. A perspective point is localized along this split direction at a distance d from the block, as shown in Figure 5. If the split direction is associated with a vertical angle, then the perspective prediction is vertical, and the perspective point is above the block. If the split direction corresponds to a horizontal angle, the perspective prediction is horizontal, and the perspective point is on left of the block. For simplicity of explanation, we will not consider mirror perspective points that can be localized below or on right side of a block. In the following we present two different ways perspective prediction can be implemented with SGPM.

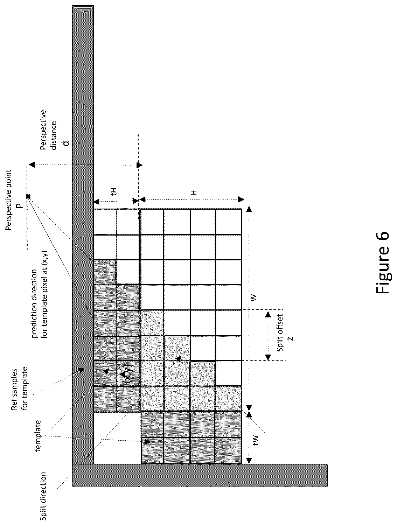

In the first method, we use the template to determine if to use the perspective prediction or the normal SGPM prediction. We introduce a flag called *perspectiveFlag* to be associated with a partition mode. When a partition mode is checked for the best pair of prediction modes that minimizes the SATD score for a template, the same partition is also checked with a perspective prediction for the same template. In the perspective prediction, the whole template is predicted using the same perspective point, which is localized on a line along the split direction. This is illustrated in Figure 6. If the perspective prediction results in lower SATD than the normal SGPM prediction, then the perspectiveFlag is set as 1, else it is set as 0. Thus, each partition mode is associated with a SATD score that results from either a best pair of prediction modes or from the perspective prediction. Now, a template-reordered candidate list is constructed, where each candidate in the list comprises a combination of the partition mode, the perspectiveFlag, and two intra prediction modes. These combinations are ranked in ascending order based on their SATD score associated with the partition mode. The length of the candidate list is kept the same, that is, 16. Both encoder and decoder can construct the same candidate list based upon the template.

The encoder checks the RD performance of the prediction using the candidates in the list. For a candidate partition mode, if the perspectiveFlag is 1, it uses the perspective prediction for the target block using the same perspective point as used for the template prediction. In this case, it will not split the target block. It uses the first reference line for the perspective prediction as it does for the normal SGPM prediction. If the perspectiveFlag value is 0, it will perform the normal SGPM prediction. If either prediction results in the best RD performance for the block, it will encode the sgpmFlag as 1 and then will encode the index of the candidate in the list, *sgpmIdx,* as in ECM.

The decoder will parse the sgpmFlag if none of the other flags decoded before it is 1. If sgpmFlag is decoded as 1, it will also decode the candidate index, *sgpmIdx,* in the sgpm list. It will then perform the template prediction in the same manner as the encoder to prepare the list of 16 partition modes along with the associated perspectiveFlags. Using the decoded candidate index *sgpmIdx*, it will perform prediction depending on the value of the perspectiveFlag. If the perspectiveFlag associated with the partition mode is 1, it will perform perspective prediction for the whole target block, else it will perform the normal SGPM prediction with the two associated prediction modes followed by blending. This is the first Embodiment.

In a variation of the above Embodiment, both the encoder and the decoder allow multiple perspective points, for example, two perspective points at d =2H and d= 4H, or four perspective points at d = 2W, 4W, 8W, and 16W. In this case, the encoder checks the SATD score with multiple perspective points for the same partition mode (i.e., the same split direction). The list of shortlisted partition modes contains another entity called persectivePointID besides the perspective-Flag, associated with each partition mode. The former indicates the index of the perspective point used in the cases perspectiveFlag is 1. The decoder will use the same perspective point for the perspective prediction if the decoded value of the perspectiveFlag is 1. The decoding process otherwise remains the same as in Embodiment 1.

In a second method, the encoder does not check the perspective prediction of the template. Thus, the SGPM list is prepared solely based on the SATD scores obtained with two candidate prediction modes, as done in ECM. There is no perspectiveFlag entry associated with the shortlisted partition modes in the list (as in Embodiment 1). The encoder checks the RD performance of both the normal SGPM prediction and the perspective prediction for the candidates in the list. In the first case, the normal SGPM prediction is obtained by blending the two predictions obtained with the two associated prediction modes, as in ECM. In the second case, it performs a perspective prediction for the whole block using a perspective point on the associated split direction. In both cases, the predictions are obtained using the first reference line, that is, the reference arrays immediately on top and on left of a target block. If either prediction method results in the best RD performance for the target block, the encoder signals it by encoding the sgpmFlag as 1 followed by encoding the candidate index *sgpmIdx.* It also encodes a perspectiveFlag, which is encoded as 1 or 0 depending on if perspective prediction or the normal SGPM prediction results in the best RD performance. If neither prediction method produces the best RD performance, then the encoder encodes the sgpmFlag as 0, as in the existing ECM codec. The encoder subtracts the prediction from the actual pixel values in the target block to compute the residual error, which undergoes transform coding, quantization, transform coefficient coding, and CABAC, etc. in the usual manner.

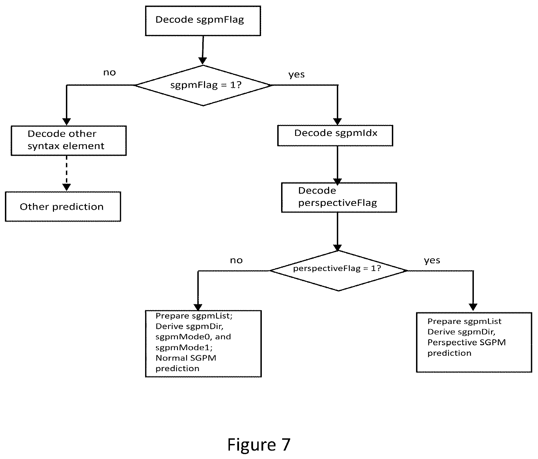

The decoder will parse the sgpmFlag if none of the other flags decoded before it is 1. If the sgpmFlag is decoded as 1, it will then decode the SGPM candidate index, *sgpmIdx,* followed by the decoding of the perspectiveFlag. Otherwise, it will decode the next syntax element. If the sgpmFlag is 1, it will derive the SGPM candidate list in the normal manner by using the template as in ECM. It will derive the split direction and the two SGPM prediction modes using the decoded value of sgpmIdx. Then, depending on the value of the perspectiveFlag, it will decide if to use perspective prediction along the split direction or to perform the SGPM prediction in the usual manner by blending the predictions with the two SGPM modes. All predictions are obtained using the first reference line. It will then add the decoded residual error to the prediction values to reconstruct the target block. The flowgraph for the decoding process is shown in Figure 7. This is the second Embodiment.

In the above Embodiment, both the normal SGPM prediction and the SGPM prediction with perspective are made with the first reference line, that is, the reference arrays immediately above and on left of a target block. In Embodiment 3, this constraint is relaxed. The SGPM predictions with perspective are available with multiple reference lines, for example, with reference lines with indices 0, 1, and 3. Here, a reference line with index N consists of the reference arrays above and on left of a target block at offset of N pixels. This extension needs the signaling of the reference line index besides the signaling of the sgpmFlag, sgpmIdx, and the perspectiveFlag. Multiple reference line (MRL) prediction in VVC and ECM already include the encoding of a flag called multiRefIdx, which denotes the value of the reference line index. Currently in ECM, the flag is set to 0, meaning the first reference line, whenever the sgpmFlag is decoded as 1. Therefore, this Embodiment, if implemented over the ECM codec, does not require any additional signaling than that in Embodiment 1, except for the enabling of SGPM with MRL. The encoder checks the RD performance of the perspective prediction with the SGPM mode using a candidate reference line. It also checks the RD performance of the normal SGPM prediction using the first reference line. The normal SGPM prediction is not available with other reference lines, as in ECM. The rest of the encoding process is the same as in Embodiment 2.

The decoder decodes the sgpmFlag and the multiRefIdx in the compressed bitstream. It decodes sgpmIdx and perspectiveFlag if the sgpmFlag is decoded as 1 and multiRefIdx is decoded as 0. If the sgpmFlag is decoded as 1 and multiRefIdx is greater than 0, then it decodes sgpmIdx but sets the perspectiveFlag as 1 without performing any actual decoding of bits. On the other hand, if the decoded value of sgpmFlag is 0, it sets the perspectiveFlag value as 0, which is the default value. If the perspectiveFlag value is 0 but sgpmFlag is 1, it makes a normal SGPM prediction, otherwise it makes a perspective prediction using the decoded value of the reference line. If the sgpmFlag value is decoded as 0, the decoder decodes the next syntax element in the compressed bitstream, and the decoding process is the same as in ECM.

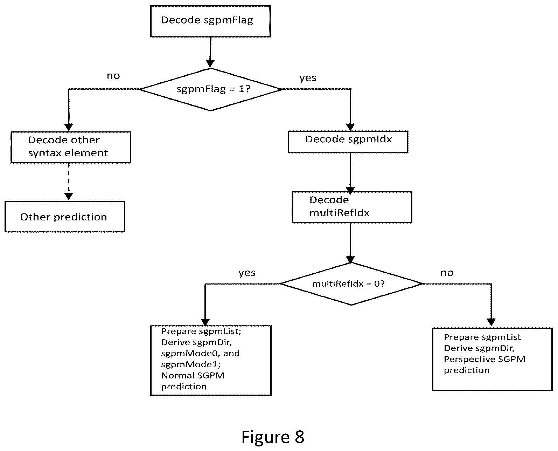

A special case of this Embodiment is the scenario when the perspective prediction with the SGPM mode is used with reference than other than the first reference line, and the normal SGPM prediction is obtained with the first reference line only. For example, the perspective prediction with the SGPM mode is obtained with the reference line #1. In this case, there is no need to signal the perspectiveFlag as the decoded values of the sgpmFlag (sgpmFlag = 1) and the multiRefIdx (multirefIdx = 1) are sufficient to know if perspective prediction was used by the encoder. The flowgraph for the decoding process is shown in Figure 8.

Extensions of Embodiment 2 and Embodiment 3 are also possible having perspective predictions with multiple perspective points. In those cases, the encoder has to signal the index of the perspective points, perspectivePointID, along with the perspectiveFlag.

The described embodiments propose a perspective intra prediction with SGPM. Two methods are proposed. In one method, there is no extra signaling with SGPM mode and the decision between perspective prediction and normal SGPM prediction is made using a template. In the other method, a perspective flag is signaled to indicate the application of perspective prediction. The first method aims for the same overhead for SGPM signaling whereas the second method aims for the same decoder complexity.

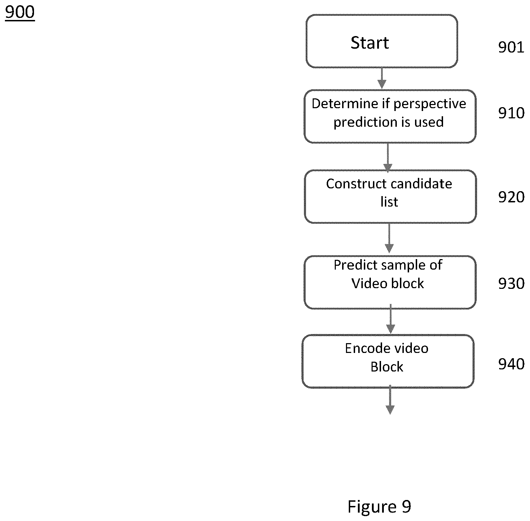

One embodiment of a method 900 under the general aspects described here is shown in Figure 9. The method commences at start block 901 and control proceeds to block 910 for determining whether perspective prediction is used to encode a video block. Control proceeds from block 910 to block 920 for constructing a candidate list, based on said determining, comprising partition mode, a flag indicative of using perspective prediction, and intra prediction modes. Control proceeds from block 920 to block 930 for predicting a sample of the video block. Control proceeds from block 930 to block 940 for encoding the video block using the prediction of the sample.

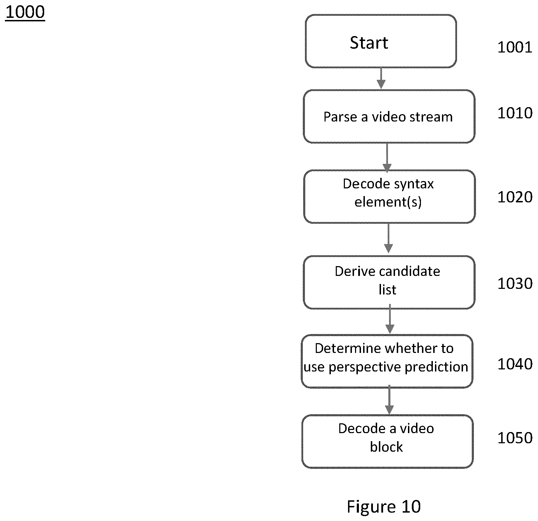

One embodiment of a method 1000 under the general aspects described here is shown in Figure 10. The method commences at start block 1001 and control proceeds to block 1010 for parsing a video stream for at least one syntax element. Control proceeds from block 1010 to block 1020 for decoding the at least one syntax element. Control proceeds from block 1020 to block 1030 for deriving a candidate list comprising prediction candidates. Control proceeds from block 1030 to block 1040 for determining whether to use perspective prediction based on the at least one syntax element. Control proceeds from block 1040 to block 1050 for decoding a video block using prediction based on the at least one syntax element.

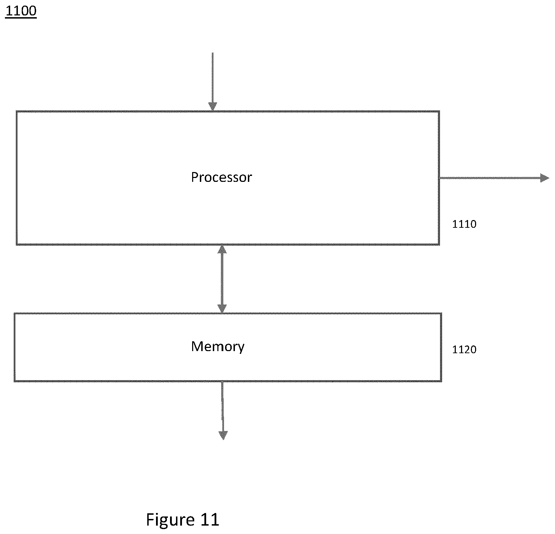

Figure 11 shows one embodiment of an apparatus 1100 for encoding, decoding, compressing or decompressing, or filtering of video data using the aforementioned methods. The apparatus comprises Processor 1110 and can be interconnected to a memory 1120 through at least one port. Both Processor 1110 and memory 1120 can also have one or more additional interconnections to external connections.

Processor 1110 is also configured to either insert or receive information in a bitstream and, either compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

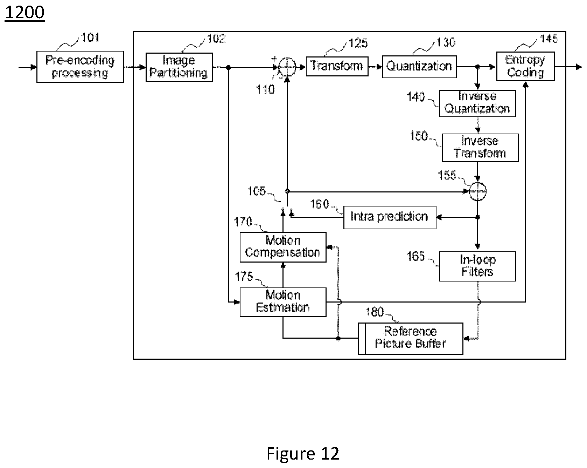

The aspects described and contemplated in this application can be implemented in many different forms. Figures 12, 13, and 14 provide some embodiments, but other embodiments are contemplated and the discussion of Figures 12, 13, and 14 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

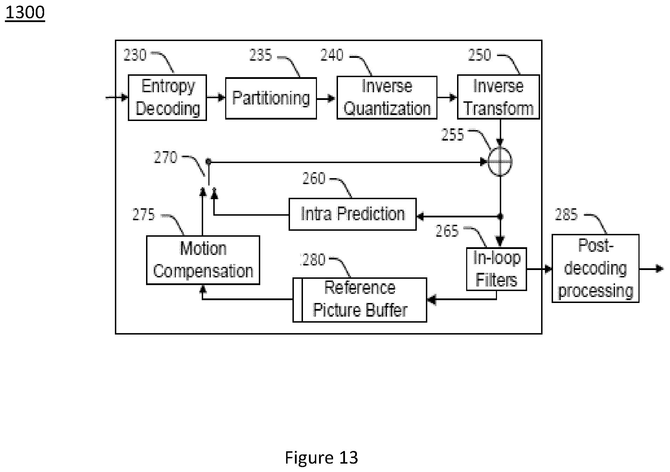

Various methods and other aspects described in this application can be used to modify modules, for example, the intra prediction, entropy coding, and/or decoding modules (160, 260, 145, 230), of a video encoder 100 and decoder 200 as shown in Figure 12 and Figure 13. Moreover, the present aspects are not limited to VVC or HEVC, and can be applied, for example, to other standards and recommendations, whether preexisting or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

Figure 12 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 13 illustrates a block diagram of a video decoder 200. In the decoder 200, a bitstream is decoded by the decoder elements as described below. Video decoder 200 generally performs a decoding pass reciprocal to the encoding pass as described in Figure 12. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

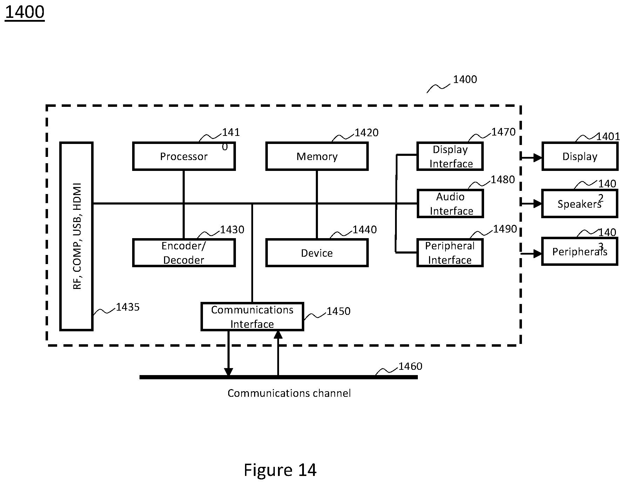

Figure 14 illustrates a block diagram of an example of a system in which various aspects and embodiments are implemented. System 1400 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1400, singly or in combination, can be embodied in a single integrated circuit (IC), multiple ICs, and/or discrete components. For example, in at least one embodiment, the processing and encoder/decoder elements of system 1400 are distributed across multiple ICs and/or discrete components. In various embodiments, the system 1400 is communicatively coupled to one or more other systems, or other electronic devices, via, for example, a communications bus or through dedicated input and/or output ports. In various embodiments, the system 1400 is configured to implement one or more of the aspects described in this document.

The system 1400 includes at least one processor 1410 configured to execute instructions loaded therein for implementing, for example, the various aspects described in this document. Processor 1410 can include embedded memory, input output interface, and various other circuitries as known in the art. The system 1400 includes at least one memory 1420 (e.g., a volatile memory device, and/or a non-volatile memory device). System 1400 includes a storage device 1440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1440 can include an internal storage device, an attached storage device (including detachable and non-detachable storage devices), and/or a network accessible storage device, as non-limiting examples.

System 1400 includes an encoder/decoder module 1430 configured, for example, to process data to provide an encoded video or decoded video, and the encoder/decoder module 1430 can include its own processor and memory. The encoder/decoder module 1430 represents module(s) that can be included in a device to perform the encoding and/or decoding functions. As is known, a device can include one or both of the encoding and decoding modules. Additionally, encoder/decoder module 1430 can be implemented as a separate element of system 1400 or can be incorporated within processor 1410 as a combination of hardware and software as known to those skilled in the art.

Program code to be loaded onto processor 1410 or encoder/decoder 1430 to perform the various aspects described in this document can be stored in storage device 1040 and subsequently loaded onto memory 1420 for execution by processor 1410. In accordance with various embodiments, one or more of processor 1410, memory 1420, storage device 1440, and encoder/decoder module 1430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1410 and/or the encoder/decoder module 1430 is used to store instructions and to provide working memory for processing that is needed during encoding or decoding. In other embodiments, however, a memory external to the processing device (for example, the processing device can be either the processor 1410 or the encoder/decoder module 1430) is used for one or more of these functions. The external memory can be the memory 1420 and/or the storage device 1440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1400 can be provided through various input devices as indicated in block 1435. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 14, include composite video.

In various embodiments, the input devices of block 1435 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1400 to other electronic devices across USB and/or HDMI connections. It is to be understood that various aspects of input processing, for example, Reed-Solomon error correction, can be implemented, for example, within a separate input processing IC or within processor 1410 as necessary. Similarly, aspects of USB or HDMI interface processing can be implemented within separate interface ICs or within processor 1410 as necessary. The demodulated, error corrected, and demultiplexed stream is provided to various processing elements, including, for example, processor 1410, and encoder/decoder 1430 operating in combination with the memory and storage elements to process the datastream as necessary for presentation on an output device.

Various elements of system 1400 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1400 includes communication interface 1450 that enables communication with other devices via communication channel 1460. The communication interface 1450 can include, but is not limited to, a transceiver configured to transmit and to receive data over communication channel 1460. The communication interface 1450 can include, but is not limited to, a modem or network card and the communication channel 1460 can be implemented, for example, within a wired and/or a wireless medium.

Data is streamed, or otherwise provided, to the system 1400, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1460 and the communications interface 1450 which are adapted for Wi-Fi communications. The communications channel 1460 of these embodiments is typically connected to an access point or router that provides access to external networks including the Internet for allowing streaming applications and other over-the-top communications. Other embodiments provide streamed data to the system 1400 using a set-top box that delivers the data over the HDMI connection of the input block 1435. Still other embodiments provide streamed data to the system 1400 using the RF connection of the input block 1435. As indicated above, various embodiments provide data in a non-streaming manner. Additionally, various embodiments use wireless networks other than Wi-Fi, for example a cellular network or a Bluetooth network.

The system 1400 can provide an output signal to various output devices, including a display 1401, speakers 1402, and other peripheral devices 1403. The display 1401 of various embodiments includes one or more of, for example, a touchscreen display, an organic light-emitting diode (OLED) display, a curved display, and/or a foldable display. The display 1401 can be for a television, a tablet, a laptop, a cell phone (mobile phone), or another device. The display 1401 can also be integrated with other components (for example, as in a smart phone), or separate (for example, an external monitor for a laptop). The other peripheral devices 1403 include, in various examples of embodiments, one or more of a standalone digital video disc (or digital versatile disc) (DVR, for both terms), a disk player, a stereo system, and/or a lighting system. Various embodiments use one or more peripheral devices 1403 that provide a function based on the output of the system 1400. For example, a disk player performs the function of playing the output of the system 1400.

In various embodiments, control signals are communicated between the system 1400 and the display 1401, speakers 1402, or other peripheral devices 1403 using signaling such as AV.Link, Consumer Electronics Control (CEC), or other communications protocols that enable device-to-device control with or without user intervention. The output devices can be communicatively coupled to system 1400 via dedicated connections through respective interfaces 1470, 1480, and 1490. Alternatively, the output devices can be connected to system 1400 using the communications channel 1460 via the communications interface 1450. The display 1401 and speakers 1402 can be integrated in a single unit with the other components of system 1400 in an electronic device such as, for example, a television. In various embodiments, the display interface 1470 includes a display driver, such as, for example, a timing controller (T Con) chip.

The display 1401 and speaker 1402 can alternatively be separate from one or more of the other components, for example, if the RF portion of input 1435 is part of a separate set-top box. In various embodiments in which the display 1401 and speakers 1402 are external components, the output signal can be provided via dedicated output connections, including, for example, HDMI ports, USB ports, or COMP outputs.

The embodiments can be carried out by computer software implemented by the processor 1410 or by hardware, or by a combination of hardware and software. As a non-limiting example, the embodiments can be implemented by one or more integrated circuits. The memory 1420 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1410 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun. As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:

At least one embodiment comprises perspective prediction with spatial geometric partition mode based on best prediction using a template.

At least one embodiment comprises perspective prediction with spatial geometric partition mode based on a flag signaled from an encoder to a corresponding decoder.

At least one embodiment comprises any of the preceding embodiments further comprising using multiple reference lines.

At least one embodiment comprises any encoding or decoding operation based on the above operations.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

**Claims**

1.  A method, comprising:

    determining whether perspective prediction is used to encode a video block;
    constructing a candidate list, based on said determining, comprising partition mode, a flag indicative of using perspective prediction, and intra prediction modes;
    predicting a sample of the video block; and,
    encoding the video block using the prediction of the sample.

2.  An apparatus, comprising:
    a memory, and a processor, configured to:

    determine whether perspective prediction is used to encode a video block;
    construct a candidate list, based on said determination, comprising partition mode, a flag indicative of using perspective prediction, and intra prediction modes;
    predict a sample of the video block; and,
    encode the video block using the predicted sample.

3.  A method, comprising:

    parsing a video stream for at least one syntax element;
    decoding the at least one syntax element;
    deriving a candidate list comprising prediction candidates;
    determining whether to use perspective prediction based on the at least one syntax element; and,
    decoding a video block using prediction based on the at least one syntax element and on the candidate list.

4.  An apparatus, comprising:
    a memory, and a processor, configured to:

    parse a video stream for at least one syntax element;
    decode the at least one syntax element;
    derive a candidate list comprising prediction candidates;
    determine whether to use perspective prediction based on the at least one syntax element; and,
    decode a video block using prediction based on the at least one syntax element and on the candidate list.

5.  The method of any one of Claims 1 or 3, or the apparatus of any one of Claims 2 or 4, wherein determination of use of perspective prediction using a template or a flag in a bitstream.

6.  The method or the apparatus of Claim 5, wherein a syntax element indicative of a candidate index for a most probable mode list is included in a bitstream.

7.  The method or the apparatus of Claim 6, when using spatial geometric mode is used.

8.  The method of any one of Claims 1 or 3 through 6, or the apparatus of any one of Claims 2 or 4 through 6, wherein a flag within a bitstream is indicative of whether to use perspective prediction.

9.  The method of any one of Claims 1 or 3 through 8, or the apparatus of any one of Claims 2 or 4 through 8, further comprising a selection of perspective prediction direction with an offset, based on a partition mode.

10. The method of any one of Claims 1 or 3 through 9, or the apparatus of any one of Claims 2 or 4 through 9, wherein multiple reference lines are used.

11. The method of any one of Claims 1 or 3 through 10, or the apparatus of any one of Claims 2 or 4 through 10, wherein a reference line index is signaled.

12. A device comprising:

    an apparatus according to any one of Claims 4 or 5 through 11; and
    at least one of (i) an antenna configured to receive a signal, the signal including a video block, (ii) a band limiter configured to limit a received signal to a band of frequencies that includes the video block, and (iii) a display configured to display an output representative of the video block.

13. A non-transitory computer readable medium containing data content generated according to the method of any one of claims 1, 3, or 5 through 11, or by the apparatus of any one of claims 2, 4, or 5 through 11, for playback using a processor.

14. A signal comprising video data generated according to the method of any one of claims 1, or 3, or 5 through 11, or by the apparatus of any one of claims 2, or 4, or 5 through 11, for playback using a processor.

15. A computer program product comprising instructions which, when the computer program product is executed by a computer, cause the computer to carry out the method of any one of claims 1, or 3 or 5 through 11.

Figure 1

Figure 2

Figure 3

Figure 4

Figure 5

Figure 6

```
                          ┌──────────────────────┐
                          │   Decode sgpmFlag     │
                          └──────────┬───────────┘
                                     │
                                     ▼
              no              ╱─────────────╲              yes
        ┌─────────────────────   sgpmFlag = 1?   ─────────────────┐
        │                     ╲─────────────╱                     │
        ▼                                                         ▼
┌────────────────────┐                              ┌──────────────────────┐
│   Decode other     │                              │   Decode sgpmIdx      │
│  syntax element    │                              └──────────┬───────────┘
└─────────┬──────────┘                                         │
          ┊                                                    ▼
          ▼                                        ┌──────────────────────┐
┌────────────────────┐                             │     Decode            │
│  Other prediction  │                             │  perspectiveFlag      │
└────────────────────┘                             └──────────┬───────────┘
                                                              │
                                                              ▼
                              no              ╱──────────────────────╲              yes
                        ┌──────────────────────   perspectiveFlag = 1?   ──────────────────┐
                        │                     ╲──────────────────────╱                     │
                        ▼                                                                   ▼
            ┌──────────────────────┐                                        ┌──────────────────────┐
            │ Prepare sgpmList;    │                                        │ Prepare sgpmList      │
            │ Derive sgpmDir,      │                                        │ Derive sgpmDir,       │
            │ sgpmMode0, and       │                                        │ Perspective SGPM      │
            │ sgpmMode1;           │                                        │ prediction            │
            │ Normal SGPM          │                                        └──────────────────────┘
            │ prediction           │
            └──────────────────────┘
```

Figure 7

21

Figure 8

900

Start                                901

Determine if perspective
prediction is used                   910

Construct candidate
list                                 920

Predict sample of
Video block                          930

Encode video
Block                                940

Figure 9

1000

| | |
|---|---|
| Start | 1001 |
| Parse a video stream | 1010 |
| Decode syntax element(s) | 1020 |
| Derive candidate list | 1030 |
| Determine whether to use perspective prediction | 1040 |
| Decode a video block | 1050 |

Figure 10

Processor 1110

Memory 1120

1100

Figure 11

1200

Pre-encoding processing 101

Image Partitioning 102

Transform 125

Quantization 130

Entropy Coding 145

Inverse Quantization 140

Inverse Transform 150

110

155

105

Intra prediction 160

In-loop Filters 165

Motion Compensation 170

Motion Estimation 175

Reference Picture Buffer 180

Figure 12

EP 4 629 616 A1

1300

Figure 13

Figure 14

1400

1400

Display 1401
Speakers 1402
Peripherals 1403

1470 Display Interface
1480 Audio Interface
1490 Peripheral Interface

1420 Memory
1440 Device
1450 Communications Interface
1410 Processor
1430 Encoder/Decoder
1435 RF, COMP, USB, HDMI
1460 Communications channel

Europäisches
Patentamt

European
Patent Office

Office européen
des brevets

## EUROPEAN SEARCH REPORT

**Application Number**

EP 24 30 5506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/107026 A1 (IKONIN SERGEY YURIEVICH [RU]) 2 April 2020 (2020-04-02)<br>* figures 1,2,3,4,17,18 *<br>* paragraph [0009] *<br>* paragraph [0078] - paragraph [0093] *<br>* paragraph [0156] - paragraph [0160] *<br>* paragraph [0171] - paragraph [0177] *<br>- - - - - | 1-15 | INV.<br>H04N19/105<br>H04N19/11<br>H04N19/176<br>H04N19/593 |
| X | WO 2021/162724 A1 (GOOGLE LLC [US]) 19 August 2021 (2021-08-19)<br>* paragraph [0004] *<br>* paragraph [00203] - paragraph [00232] *<br>* paragraph [00259] *<br>- - - - - | 1-15 | |
| X | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ),<br>,<br>no. JVET-AG2025 ; m66954<br>29 March 2024 (2024-03-29), XP030316747, Retrieved from the Internet:<br>URL:https://jvet-experts.org/doc_end_user/documents/33_Teleconference/wg11/JVET-AG2025-v1.zip JVET-AG2025-v1.docx [retrieved on 2024-03-29] | 13,14 | |
| A | * sections 3.1.11, 3.1.17 and 3.2.12.3 *<br>- - - - - | 1-12,15 | **TECHNICAL FIELDS SEARCHED (IPC)**<br><br>H04N |

The present search report has been drawn up for all claims

| Place of search | Date of completion of the search | Examiner |
|---|---|---|
| The Hague | 20 September 2024 | Ferré, Pierre |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 30 5506

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | Publication date | Patent family member(s) | | Publication date |
|---|---|---|---|---|
| US 2020107026 A1 | 02-04-2020 | CN | 111066322 A | 24-04-2020 |
| | | EP | 3639517 A1 | 22-04-2020 |
| | | US | 2020107026 A1 | 02-04-2020 |
| | | WO | 2018231087 A1 | 20-12-2018 |
| WO 2021162724 A1 | 19-08-2021 | CN | 115004703 A | 02-09-2022 |
| | | EP | 4074046 A1 | 19-10-2022 |
| | | EP | 4074047 A1 | 19-10-2022 |
| | | JP | 7480319 B2 | 09-05-2024 |
| | | JP | 2023514215 A | 05-04-2023 |
| | | JP | 2024087036 A | 28-06-2024 |
| | | US | 2023050660 A1 | 16-02-2023 |
| | | US | 2023058845 A1 | 23-02-2023 |
| | | WO | 2021162723 A1 | 19-08-2021 |
| | | WO | 2021162724 A1 | 19-08-2021 |

EPO FORM P0459

For more details about this annex : see Official Journal of the European Patent Office, No. 12/82